# EUROPEAN PATENT APPLICATION

(11) **EP 4 156 626 A1**
(43) Date of publication of application: **29.03.2023**
(21) Application number: 21828119.4
(22) Date of filing: 03.06.2021
(51) Int. Cl.: H04L 29/12

(54) **IPV6 NETWORK COMMUNICATION METHOD, APPARATUS AND SYSTEM**

(30) Priority: 22.06.2020 CN 202010575876
(71) Applicant: Huawei Technologies Co., Ltd., Longgang District, Shenzhen, Guangdong 518129 (CN)
(72) Inventor: DAI, Wenlei, Shenzhen, Guangdong 518129 (CN); HE, Haoran, Shenzhen, Guangdong 518129 (CN)
(74) Representative: Goddar, Heinz J.
(86) International application number: PCT/CN2021/098155
(87) International publication number: WO 2021/259032

(57) **Abstract**

This application provides an IPv6 network communication method, an apparatus, and a system. The method includes: A network device receives an uplink data packet sent by a terminal to a data network, where the uplink data packet is used to request to establish a service connection. Then, the network device modifies a source IP address of the uplink data packet to a first IP address, and sends a modified uplink data packet to the data network, where the first IP address includes an IPv6 prefix configured by the data network for the network device. In addition, the network device may further generate connection tracking information of the service connection, where the connection tracking information indicates that a destination IP address of a downlink data packet that is from the data network and that belongs to the service connection is the first IP address. According to the technical solutions of this application, a network security setting may identify the downlink data packet that belongs to the service connection initiated by the terminal, and does not block the service connection initiated by the terminal to the data network, to ensure that the terminal can access the data network to implement a specific service.

## Description

This application claims priority to Chinese Patent Application No. 202010575876.4, filed with the China National Intellectual Property Administration on June 22, 2020 and entitled "IPv6 NETWORK COMMUNICATION METHOD, APPARATUS, AND SYSTEM", which is incorporated herein by reference in its entirety.

### TECHNICAL FIELD

Embodiments of this application relate to the communication field, and in particular, to an IPv6 network communication method, an apparatus, and a system.

### BACKGROUND

A network device running in an internet protocol version 6 (internet protocol version 6, IPv6) full tunnel may receive IPv6 prefixes that are separately configured by a plurality of data networks for the network device. A terminal may generate an internet protocol (internet protocol, IP) address of the terminal, and the IP address may include one of the IPv6 prefixes received by the network device.

When an IP address of a terminal does not include an IPv6 prefix configured by a data network for the network device, to ensure that the terminal can access the data network to implement a specific service, a source IP address and/or a destination IP address of a data packet generated when the terminal interacts with the data network usually needs to be modified by using the network device. In addition, to prevent a downlink data packet that belongs to a service connection initiated by the terminal from being terminated/discarded by a network security setting enabled by the network device, the network security setting needs to be disabled. However, this may cause a hidden network security problem.

### SUMMARY

Embodiments of this application provide an IPv6 network communication method, an apparatus, and a system. Even if an IP address of a terminal does not include an IPv6 prefix configured by a data network for a network device, a network security setting enabled by the network device may identify a downlink data packet that belongs to a service connection initiated by the terminal, and may not block the service connection initiated by the terminal to the data network, to ensure that the terminal can access the data network to implement a specific service.

According to a first aspect, an IPv6 network communication method is provided. The method may be performed by a communication apparatus. The communication apparatus may be a network device, or may be a chip or system-on-a-chip deployed in the network device. The method includes: The communication apparatus first receives an uplink data packet sent by a terminal to a first data network, where the uplink data packet is used to request to establish a service connection. Then, the communication apparatus modifies a source IP address of the uplink data packet to a first IP address, and sends a modified uplink data packet to the first data network, where the first IP address includes an IPv6 prefix configured by the first data network for the network device. In addition, the communication apparatus may further generate connection tracking information of the service connection, where the connection tracking information indicates that a destination IP address of a downlink data packet that is from the first data network and that belongs to the service connection is the first IP address.

In this way, for the downlink data packet that is from the data network and that belongs to the service connection, even if the network device enables a network security setting, the network security setting may identify, based on the indication of the connection tracking information included in the service connection, that the downlink data packet is a downlink data packet that belongs to the service connection, that is, the downlink data packet that belongs to the service connection is determined by the network security setting as a data packet that belongs to the service connection initiated by the terminal. The downlink data packet is not terminated/discarded by the network security setting, to ensure that the terminal can access the data network by using the network device to implement a corresponding service.

In other words, even if the IP address of the terminal does not include the IPv6 prefix configured by the data network for the network device, the security setting enabled by the network device may identify the downlink data packet that belongs to the service connection initiated by the terminal, and may not block the service connection initiated by the terminal to the data network, to ensure that the terminal can access the data network to implement a specific service.

According to a second aspect, a communication apparatus is provided. The communication apparatus includes units or means (means) configured to perform the steps in the foregoing first aspect.

According to a third aspect, a communication apparatus is provided. The communication apparatus includes a processor and an interface circuit. The processor is configured to communicate with another apparatus by using the interface circuit, and perform the method provided in the first aspect.

According to a fourth aspect, a communication apparatus is provided. The communication apparatus includes a processor. The processor is connected to a memory and is configured to invoke a program stored in the memory, to perform the method provided in the first aspect. The memory may be located inside or outside the communication apparatus.

According to a fifth aspect, a network device is provided, including the communication apparatus provided in any one of the foregoing aspects.

According to a sixth aspect, a network system is provided, including a terminal, a first data network, and the communication apparatus/the network device provided in any one of the foregoing aspects. In some possible designs, the network system may further include a second data network, and an IP address of the terminal includes an IPv6 prefix configured by the second data network for the network device.

According to a seventh aspect, a computer-readable storage medium is provided, configured to store instructions. When the instructions are executed by a processor of a communication apparatus, the communication apparatus is enabled to implement the method provided in the first aspect.

According to an eighth aspect, a computer program is provided. When being executed by a processor, the computer program is configured to perform the method provided in the foregoing first aspect.

According to a ninth aspect, a computer program product is provided. The computer program product may include the computer-readable storage medium provided in the seventh aspect, and the computer-readable storage medium includes the computer program provided in the eighth aspect.

According to a tenth aspect, a chip is provided. The chip includes a processor configured to implement functions of the communication apparatus provided in the foregoing aspects, for example, receiving or processing data and/or information in the method in the foregoing first aspect. In a possible design, the chip further includes a memory configured to store a program instruction and/or data.

In the foregoing aspects, the processor may be implemented by using hardware, or may be implemented by using software. When the processor is implemented by using the hardware, the processor may be a logic circuit, an integrated circuit, or the like. When the processor is implemented by using software, the processor may be a general-purpose processor, and is implemented by reading software code stored in the memory. The memory may be integrated in the processor, and may be located outside the processor and exist independently.

In the foregoing aspects, there may be one or more processors and one or more memories in the communication apparatus. The memory may be integrated with the processor, or the memory may be disposed separately from the processor. In a specific implementation process, the memory and the processor may be integrated on a same chip, and may be separately disposed on different chips. A type of the memory and a setting manner of the memory and the processor are not limited in this embodiment of this application.

In the foregoing aspects, an information transmission or receiving process may be a process in which the processor receives and sends information. For example, a process of sending an uplink data packet may be outputting the uplink data packet from the processor. A process of receiving an uplink data packet may be receiving the uplink data packet by the processor. Specifically, the uplink data packet output by the processor may be output to a transmitter, and the uplink data packet received by the processor may be from a receiver. The transmitter and the receiver may be collectively referred to as a transceiver.

In the foregoing aspects, the source IP address of the uplink data packet from the terminal may be a second IP address, and the second IP address includes a second IPv6 prefix configured by the second data network for the network device. Correspondingly, the communication apparatus may perform IPv6-to-IPv6 network prefix translation (IPv6-to-IPv6 Network Prefix Translation, NPTv6) on the second IP address based on a first IPv6 prefix, to obtain the first IP address. In this way, after the source IP address of the uplink data packet from the terminal is modified to the first IP address, an application layer checksum of a modified uplink data packet is the same as that of the uplink data packet before modification, and the application layer checksum of the modified uplink data packet does not need to be recalculated.

In the foregoing aspects, the communication apparatus may further receive the downlink data packet that is from the first data network and that belongs to the service connection, modify the destination IP address of the downlink data packet to the source IP address of the uplink data packet from the terminal, and then send a modified downlink data packet to the terminal. In this way, a service connection can be established between the terminal and the data network, and a specific service can be implemented based on the service connection.

In the foregoing aspects, when receiving the downlink data packet that is from the first data network and that belongs to the service connection, the communication apparatus may further set a connection state of the connection tracking information to indication information indicating that the connection succeeds.

In the foregoing aspects, the first data network may include but is not limited to an internet protocol television (internet protocol television, IPTV) network or a cloud virtual reality (cloud virtual reality, Cloud VR) network.

In the foregoing aspects, the second data network may include but is not limited to the internet.

### BRIEF DESCRIPTION OF DRAWINGS

FIG. 1 is a schematic diagram of a service scenario to which a technical solution is applicable according to an embodiment of this application;
FIG. 2 is a schematic diagram of a structure of an IP address that includes an IPv6 prefix;
FIG. 3 is a flowchart of a communication method according to an embodiment of this application;
FIG. 4 is a schematic diagram of a process in which a terminal communicates with a data network according to an embodiment of this application; and
FIG. 5 is a schematic diagram of a structure of a communication apparatus according to an embodiment of this application.

### DESCRIPTION OF EMBODIMENTS

The following describes technical solutions of embodiments in this application with reference to accompanying drawings.

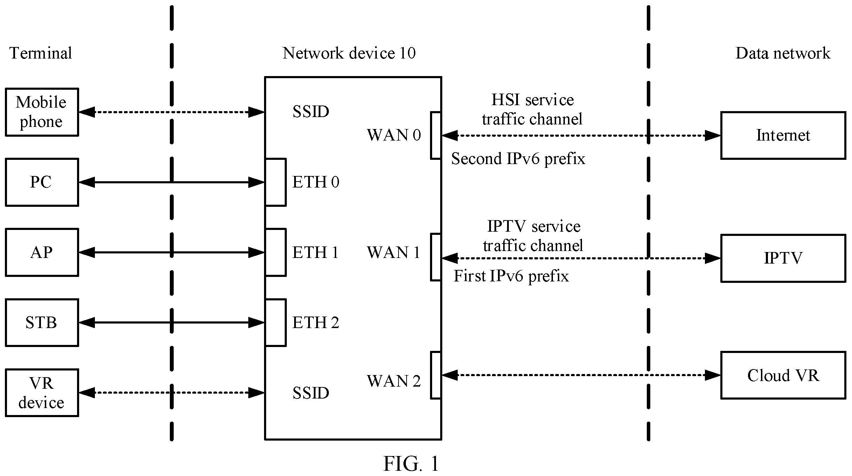

FIG. 1 is a schematic diagram of a service scenario to which a technical solution is applicable according to an embodiment of this application. As shown in FIG. 1, a service set identifier (service set identifier, SSID) may be allocated to a network device 10, and the network device may be configured with a plurality of Ethernet interfaces such as ETH 0, ETH 1, and ETH 2, and configured with a plurality of wide area network interfaces such as WAN 0, WAN 1, and WAN 2. It may be understood that a structure of the network device 10 in FIG. 1 is not construed as a limitation on a specific structure of the network device. The network device 10 may be configured with more or fewer Ethernet interfaces, and configured with more or fewer wide area network interfaces. An identifier of each Ethernet interface and an identifier of each wide area network interface may be replaced by real values.

The network device 10 may be connected to one or more data networks used to support specific services. For example, the network device 10 may be separately connected, through a plurality of different wide area network interfaces, to data networks that are used to support specific services, such as the internet, an IPTV network, and a cloud VR network. Different data networks may configure different IPv6 prefixes for the network device 10, and a prefix may be specifically configured by an upper layer server, a network management device, or another device in a data network.

The data network may maintain a route from the data network to the network device 10 based on the IPv6 prefix configured by the data network for the network device. Correspondingly, for a downlink data packet that is to be sent to a terminal connected to the network device 10, only when a destination IP address of the downlink data packet includes the IPv6 prefix, the data network may send the downlink data packet to the network device 10 based on a route corresponding to the IPv6 prefix.

A terminal configured with a wireless communication module may be connected to the network device 10 based on the SSID allocated to the network device 10. For example, a mobile phone or a virtual reality (Virtual Reality, VR) device may be connected to the network device 10 based on the SSID allocated to the network device 10. A terminal configured with an interface apparatus for connecting to a communication cable may be connected to an Ethernet interface of the network device 10 by using a corresponding communication cable. For example, a personal computer (personal computer, PC) or a set top box (set top box, STB) may be connected to an Ethernet interface of the network device 10 by using a corresponding communication cable. It may be understood that the foregoing various terminals may be directly connected to the network device 10, or may be connected to an access point (access point, AP). The AP may be connected to the network device 10 based on the SSID allocated to the network device 10, or is connected to an Ethernet interface of the network device 10 by using a corresponding communication cable. The terminal connected to the network device 10 may be of another type, for example, an augmented reality (augmented reality, AR) device.

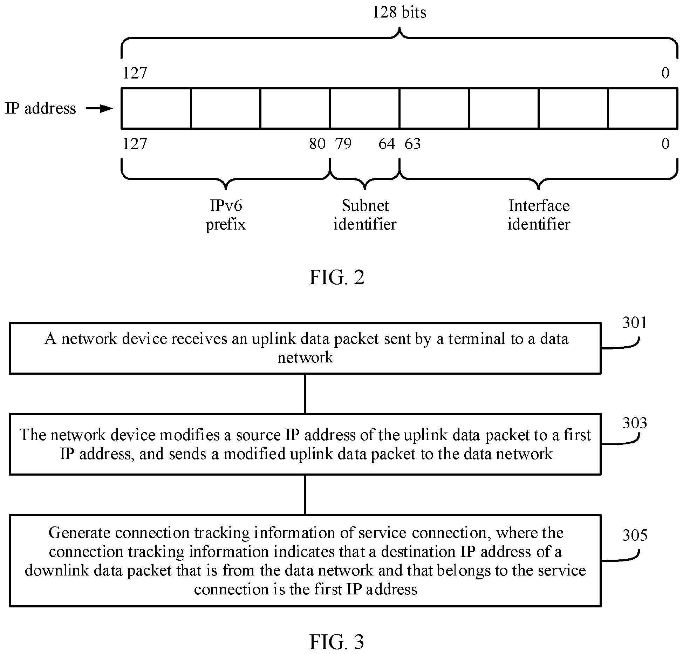

The terminal may generate an IP address of the terminal based on one of IPv6 prefixes configured for the network device 10. As shown in FIG. 2, the IP address generated by the terminal may include a network part and an interface part. The interface part may include an interface identifier whose length is 64 bits and that is generated by the terminal based on a MAC address of the terminal. The network part may include one of IPv6 prefixes configured for the network device 10, and optionally, may further include a subnet identifier whose length is 16 bits. For example, the network part may include the subnet identifier whose length is 16 bits and an IPv6 prefix whose length is 48 bits.

It may be understood that the network device 10 may track a service connection, to generate connection tracking information (or referred to as a connection tracking entry) of the service connection. The connection tracking information may include uplink connection information and downlink connection information, and may further include other information such as a protocol type and a protocol number. The uplink connection information may include at least a source IP address and a destination IP address that are of an uplink data packet that is from the terminal and that belongs to the service connection. The downlink connection information may include at least a source IP address and a destination IP address of a downlink data packet that is expected to be received by the network device 10 and that belongs to the service connection.

In addition, based on the protocol type of the service connection, the uplink connection information and the downlink connection information may further include one or more pieces of other information. For example, for connection tracking information of a transmission control protocol (transmission control protocol, TCP) connection, uplink connection information of the connection tracking information may further include a source port number and a destination port number of the uplink data packet that belongs to the TCP connection, and downlink connection of the connection tracking information may further include a source port number and a destination port number of the downlink data packet that is expected to be received by the network device 10 and that belongs to the service connection.

The network device 10 may enable a network security setting, and the network security setting may include but is not limited to a firewall or an application layer gateway (application layer gateway, ALG). For a downlink data packet from a data network, the network security setting may determine, based on connection tracking information generated by the network device 10, whether the downlink data packet belongs to a service connection initiated by the terminal. For example, connection information of the downlink data packet from the data network may be obtained, and the connection information may include but is not limited to a source IP address and a destination IP address of the downlink data packet. Then the connection information of the downlink data packet is matched with a downlink connection of each piece of connection tracking information generated by the network device. If downlink connection information of one piece of connection tracking information is the same as the connection information of the downlink data packet, it indicates the downlink data packet belongs to a service connection corresponding to this piece of connection tracking information, and correspondingly, it may be determined that the downlink data packet belongs to the service connection initiated by the terminal.

If it is determined that the downlink data packet belongs to the service connection initiated by the terminal, the downlink data packet is forwarded by the network device 10 to the corresponding terminal. On the contrary, the downlink data packet is terminated/discarded by the network security setting, so that the downlink data packet is not forwarded by the network device 10 to the corresponding terminal. In other words, by enabling the network security setting, the network device 10 may allow a service connection initiated by the terminal to the data network, and block a service connection initiated by the data network to the terminal, to filter a downlink data packet that is from the data network and that may be used to attack the terminal to prevent an intruder from attacking the terminal by using the data network.

If the IP address of the terminal does not include the IPv6 prefix configured by the data network for the network device 10, when the network device 10 receives an uplink data packet sent by the terminal to the data network and the uplink data packet is used to request to establish a service connection, the network device 10 needs to modify a source IP address of the uplink data packet to a new IP address. The new IP address includes the IPv6 prefix configured by the data network for the network device 10. In this way, after a modified uplink data packet is sent to the data network, the data network may send a downlink data packet that belongs to the service connection to the network device 10, where a destination IP address of the downlink data packet is a new IP address.

In this case, in connection tracking information of the service connection to which the uplink data packet belongs, downlink connection information may indicate that the destination IP address of the downlink data packet of the service connection is the IP address of the terminal, that is, the destination IP address of the downlink data packet that is expected to be received by the network device 10 and that belongs to the service connection is the IP address of the terminal. However, the destination IP address of the downlink data packet that belongs to the service connection is a new IP address. The network security setting cannot identify, based on the connection tracking information of the service connection, the downlink data packet that belongs to the service connection, or the downlink data packet that belongs to the service connection is erroneously determined as a downlink data packet that does not belong to the service connection initiated by the terminal. Consequently, the downlink data packet that belongs to the service connection is terminated/discarded by the network security setting enabled by the network device. Correspondingly, to prevent the downlink data packet that belongs to the service connection initiated by the terminal from being terminated/discarded by the network security setting, the network security setting needs to be disabled.

In view of this, embodiments of this application provide at least one communication method, an apparatus, and a system. The network device first receives an uplink data packet sent by the terminal to a data network, where the uplink data packet is used to request to establish a service connection. Then, a source IP address of the uplink data packet is modified to a first IP address, and a modified uplink data packet is sent to the data network, where the first IP address includes an IPv6 prefix configured by the data network for the network device. In addition, the network device may further generate connection tracking information of the service connection, and the connection tracking information indicates that a destination IP address of a downlink data packet that is from the data network and that belongs to the service connection is the first IP address. In this way, for the downlink data packet that is from the data network and that belongs to the service connection, the network security setting may identify, based on the indication of connection tracking information of the service connection, that the downlink data packet is a downlink data packet that belongs to the service connection, or the downlink data packet that belongs to the service connection is determined by the network security setting as a data packet that belongs to the service connection initiated by the terminal. The downlink data packet is not terminated/discarded by the network security setting, to ensure that the terminal can access the data network by using the network device to implement a corresponding service.

In other words, even if the IP address of the terminal does not include the IPv6 prefix configured by the data network for the network device, the security setting enabled by the network device may identify the downlink data packet that belongs to the service connection initiated by the terminal, and may not block the service connection initiated by the terminal to the data network, to ensure that the terminal can access the data network to implement a specific service.

FIG. 3 is a flowchart of a communication method according to an embodiment of this application. As shown in FIG. 3, the method may include at least the following steps.

Step 301: A network device receives an uplink data packet sent by a terminal to a data network.

A source IP address of the uplink data packet may include or not include an IPv6 prefix configured by the data network for the network device, and the uplink data packet is used to request to establish a service connection. The service connection may include but is not limited to a TCP connection or a user datagram protocol (user datagram protocol, UDP) connection, and may further include, for example, an internet control message protocol (internet control message protocol, ICMP) connection. The source IP address of the uplink data packet is an IP address of the terminal.

The data network may include but is not limited to the internet, an IPTV network, or a cloud VR network.

Step 303: The network device modifies the source IP address of the uplink data packet to a first IP address, and sends a modified uplink data packet to the data network.

The first IP address includes the IPv6 prefix configured by the data network for the network device. In this way, the data network is capable of sending a downlink data packet that belongs to the service connection and whose destination IP address is the first IP address to the network device.

Step 305: Generate connection tracking information of the service connection.

The connection tracking information indicates that the destination IP address of the downlink data packet that is from the data network and that belongs to the service connection is the first IP address. A network security setting may identify, based on the indication of connection tracking information of the service connection, the downlink data packet that belongs to the service connection, and the downlink data packet that belongs to the service connection is not terminated/discarded, to ensure that the terminal can access the data network to implement a corresponding service.

In conclusion, it can be learned that, even if the IP address of the terminal does not include the IPv6 prefix configured by the data network for the network device, the network security setting enabled by the network device may identify the downlink data packet that belongs to the service connection initiated by the terminal, and may not block the service connection initiated by the terminal to the data network, to ensure that the terminal can access the data network to implement a specific service.

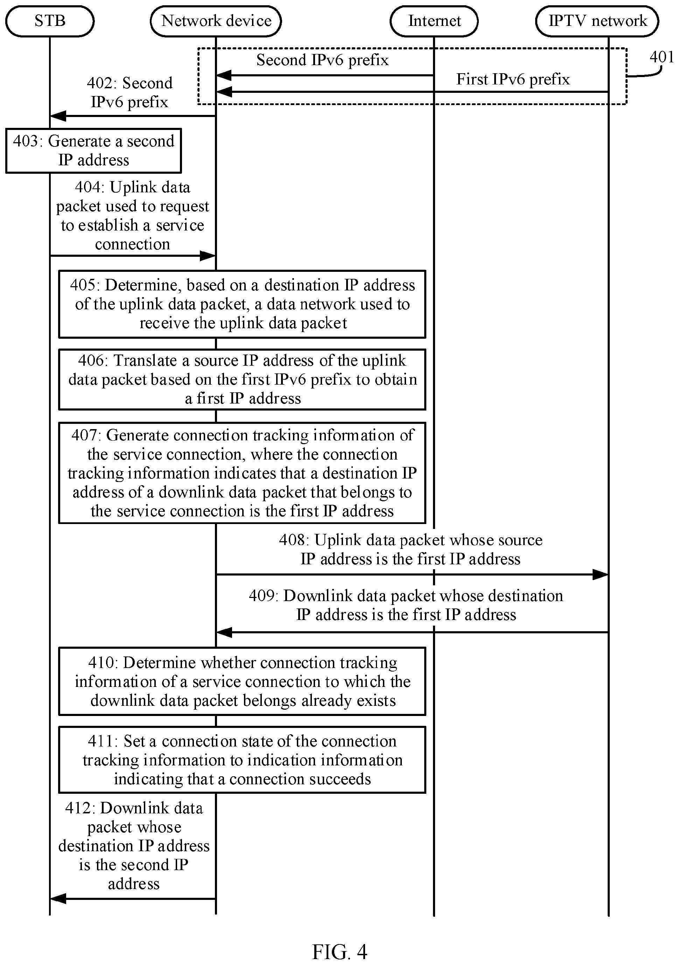

With reference to the service scenario shown in FIG. 1, the following exemplarily describes a process of communication between the terminal and the data network. For example, an IP address of an STB includes an IPv6 prefix configured by the internet for a network device, and the STB accesses an IPTV network to implement a corresponding IPTV service. A process in which the STB communicates with the IPTV network may include the following step 401 to step 411. Another data network may be used to replace the internet and/or the IPTV network in the embodiment shown in FIG. 4, and another type of terminal may be used to replace the STB, to obtain a technical solution based on a same concept as the embodiment shown in FIG. 4.

Step 401: The IPTV network configures a first IPv6 prefix for the network device, and the internet configures a second IPv6 prefix for the network device.

Step 402: The network device sends the second IPv6 prefix to the STB.

It may be understood that the network device may be connected to a plurality of types of terminals, and the plurality of types of terminals may need to access the internet. However, only one or more specific types of terminals need to access another data network, resulting in that a quantity of data packets generated when the network device interacts with the internet is far greater than a quantity of data packets generated when the network device interacts with another data network.

Correspondingly, to reduce load of the network device to enable the network device to modify a source IP address/a destination IP address of data packets in a relatively small quantity, in a possible implementation, the network device may broadcast only the second IPv6 prefix from the internet, so that IP addresses generated by terminals including the STB each include the second IPv6 prefix.

Step 403: The STB generates an IP address of the STB based on the second IPv6 prefix.

The IP address generated by the STB may include the second IPv6 prefix and an interface identifier whose length is 64 bits, and the interface identifier is generated by the STB based on a media access control (media access control, MAC) address of the STB. For ease of description, the IP address generated by the STB is referred to as a second IP address in subsequent steps.

Step 404: The STB sends, to the data network, an uplink data packet used to request to establish a service connection.

It may be understood that, after receiving the uplink data packet from the STB, the network device may identify, based on a valid payload (Payload) carried in the uplink data packet, whether the uplink data packet is an uplink data packet used to request to establish a service connection. Alternatively, connection information of the uplink data packet may be obtained from the uplink data packet, for example, information such as a source IP address of the uplink data packet and a destination IP address of the uplink data packet may be obtained; and whether connection tracking information of a service connection to which the uplink data packet belongs already exists in the network device may be determined based on the connection information. If no connection tracking information exists, it indicates that the uplink data packet is an uplink data packet used to request to establish the service connection.

When the network device receives the uplink data packet that is from the STB and that is used to request to establish the service connection, step 405 may be performed, to be specific, determine, based on the destination IP address of the uplink data packet, a data network used to receive the uplink data packet.

If the data network used to receive the uplink data packet is the internet, the uplink data packet may be transmitted to the internet through a high speed internet (high speed internet, HSI) service traffic channel between the network device and the data network. A related process of processing the uplink data packet by the network device 10 is not described herein.

If the data network used to receive the uplink data packet is the IPTV network, the network device may perform step 406, to be specific, translate the source IP address of the uplink data packet based on the first IPv6 prefix, to obtain a first IP address.

Herein, NTPV6 may be performed on the source IP address (namely, the second IP address) of the uplink data packet, in other words, the source IP address of the uplink data packet is translated based on an RFC6292 algorithm.

For the first IP address obtained by the network device 10, after the source IP address of the uplink data packet is replaced with the first IP address in a subsequent process, an application layer checksum (checksum) of the uplink data packet is not changed, and an application layer checksum of a modified uplink data packet does not need to be recalculated.

In addition, if a length of the first IPv6 prefix is not greater than 48 bits, only a height 64 bits of the second IP address needs to be modified, and an interface identifier of the second IP address does not need to be modified at all. If the length of the first IPv6 prefix is greater than 48 bits, the height 64 bits of the second IP address needs to be modified, and 16 bits of the interface identifier need to be modified. In this way, an interface part of the first IP address is the same as or is highly similar to the interface identifier of the second IP address, and the interface part of the first IP address can accurately express a MAC address of the STB. For the modified uplink data packet, it is extremely easy to trace the uplink data packet based on the interface part of the first IP address. This helps to quickly determine that the terminal that sends the uplink data packet is the STB.

For example, the second IPv6 prefix configured by the internet for the network device is 2015:2015:0:6a, the first IPv6 prefix configured by the IPTV network for the network device is 2002:0:0:0, and the interface identifier generated by the STB is 6987:9945:8ec1:1065. The source IP address of the uplink data packet sent by the STB to the IPTV network is 2015:2015:0:6a:6987:9945:8ec1:1065. The NPTV6 is performed on the second IP address 2015:2015:0:6a:6987:9945:8ec1:1065 based on the first IPv6 prefix "2002:0:0:0", and the obtained first IP address is 2002:0:0:0:8a19:9945:8ec1:106. In a subsequent process, after replacing the source IP address 2015:2015:0:6a:6987:9945:8ec1:1065 of the uplink data packet with 2002:0:0:0:8a19:9945:8ec1:1065, the network device does not change the application layer checksum of the uplink data packet. There is a relatively high similarity between the interface part "8a19:9945:8ec1:1065" of the first IP address and the interface identifier "6987:9945:8ec1:1065", so that it is easy to locate, based on the interface part of the first IP address, the STB that sends the uplink data packet.

Step 407: The network device generates connection tracking information of the service connection.

Downlink connection information of the connection tracking information may indicate that the destination IP address of the downlink data packet that belongs to the service connection is the first IP address. The network device may further set a connection state of the connection tracking information to be new (NEW), in other words, the network device sets the connection state of the connection tracking information to be indication information indicating a new connection.

In this embodiment of this application, for connection tracking information of a service connection, a destination IP address of uplink connection information of the connection tracking information is the same as a source IP address of downlink connection information of the connection tracking information. A source IP address of the uplink connection information of the connection tracking information is a source IP address of an uplink data packet that is from the terminal and that belongs to the service connection, that is, the source IP address of the uplink connection information is the second IP address generated by the terminal. A destination IP address of the downlink connection information of the connection tracking information is a source IP addre ss of a modified uplink data packet, that is, the destination IP address of the downlink connection information is the first IP address generated by the network device.

In an example in which the STB sends, to the IPTV network, the uplink data packet used to request to establish a service connection, the network device may obtain the source IP address IP_1 of the uplink data packet and the destination IP address IP_2 of the uplink data packet, and the network device may obtain the first IP address IP_3 by performing NPTV6 on the IP_1. The connection tracking information of the service connection generated by the network device is shown in Table 1.

**Table 1**

| | Source IP address | Destination IP address |
|---|---|---|
| Uplink connection information | IP_1 | IP_2 |
| Downlink connection information | IP_2 | IP_3 |

As shown in the foregoing Table 1, in the connection tracking information of the service connection, both the destination IP address included in the uplink connection information and the source IP address included in the downlink connection information are IP_2. The source IP address included in the uplink connection information is different from the destination IP address included in the downlink connection information. The source IP address included in the uplink connection information is the source IP address IP_1 of the uplink data packet that is from the terminal and that belongs to the service connection, and the destination IP address included in the downlink connection information is the first IP address IP_3. In other words, the downlink connection information indicates that the destination IP address of the downlink data packet that is expected to be received by the network device and that belongs to the service connection is IP_3.

During specific implementation, an NPTV6/RFC6292 algorithm may be embedded into a functional module, in the network device, for implementing connection tracking on a service connection, so that in connection tracking information generated by the network device, a destination IP address included in downlink connection information is a first IP address obtained by translating an IP address of a terminal by using the NPTV6/RFC6292 algorithm. Therefore, the network device can enable a network security setting to block a service connection initiated by a data network. Specifically, the network device can be compatible with various application layer security technologies such as a firewall, an ALG, and port mapping.

Step 408: The network device modifies the source IP address of the uplink data packet to the first IP address, and sends the modified uplink data packet to the IPTV network. In other words, the uplink data packet, namely, IPTV service traffic, sent by the terminal to the IPTV network may be transmitted to the IPTV network by using an IPTV service traffic channel between the network device 10 and the IPTV network.

Step 409: The network device receives the downlink data packet that is sent by the IPTV network to the network device and that belongs to the service connection.

The destination IP address of the downlink data packet that belongs to the service connection is the first IP address.

Step 410: The network device determines whether connection tracking information of a service connection to which the downlink data packet belongs already exists.

In a possible implementation, the network device may obtain connection information from the data network, and the connection information may include at least a source IP address of the downlink data packet and a destination IP address of the downlink data packet. If downlink connection information of one of pieces of connection tracking information generated by the network device is the same as connection information of the downlink data packet, it may be determined that this piece of connection tracking information is connection tracking information of the service connection to which the downlink data packet belongs, or it is determined that the connection tracking information of the service connection to which the downlink data packet belongs already exists. Correspondingly, the network security setting enabled by the network device may determine that the downlink data packet is a downlink data packet that belongs to the service connection initiated by the terminal, the network security setting does not terminate/discard the downlink data packet, and the network device may perform the following step 411 and step 412.

Step 411: Set a connection state of the connection tracking information of the service connection to which the downlink data packet belongs to indication information indicating that the connection succeeds. For example, the indication information of the connection tracking information is set from NEW to ESTABLISHED.

Only when receiving for the first time a downlink data packet that belongs to a specific service connection initiated by the STB, the network device sets a connection state of connection tracking information of the service connection to which the downlink data packet belongs to indication information indicating that the connection succeeds, so that the network security setting can sense that the STB has successfully established a service connection to the IPTV network.

Step 412: Modify the destination IP address of the downlink data packet to the second IP address, and send a modified downlink data packet to the STB.

The network device may modify, based on the connection tracking information of the service connection, the destination IP address of the downlink data packet to a source IP address included in uplink connection information of the connection tracking information of the service connection. Alternatively, the network device may register a correspondence between the first IP address and the second IP address into a network address translation (Network Address Translation, NAT) table, and modify the destination IP address of the downlink data packet from the first IP address to the second IP address based on the correspondence recorded in the NAT table. The downlink data packet that belongs to the service connection can be sent to the STB, so that a service connection can be established between the STB and the IPTV network, and an IPTV service can be implemented based on the service connection.

Based on a same concept as the foregoing method embodiments, an embodiment of this application further provides a communication apparatus 500. The communication apparatus 500 includes units or means for implementing the steps performed by the network device in any one of the foregoing methods.

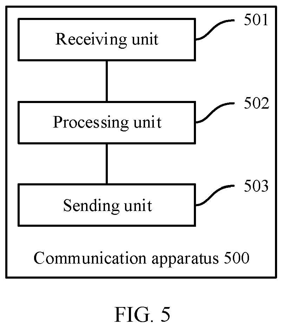

As shown in FIG. 5, the communication apparatus 500 may include: a receiving unit 501, configured to receive an uplink data packet sent by a terminal to a first data network, where the uplink data packet is used to request to establish a service connection; a processing unit 502, configured to: modify a source IP address of the uplink data packet to a first IP address, where the first IP address includes a first IPv6 prefix configured by the first data network for a network device; and generate connection tracking information of the service connection, where the connection tracking information indicates that a destination IP address of a downlink data packet that is from the first data network and that belongs to the service connection is the first IP address; and a sending unit 503, configured to send a modified uplink data packet to the first data network.

It should be understood that the division into the units in the foregoing communication apparatus is merely logical function division. During actual implementation, all or some of the units may be integrated into a physical entity, or may be physically separated. In addition, all the units in the communication apparatus may be implemented in a form of software invoked by a processing element, all the units may be implemented in a hardware form, or some units may be implemented in a form of software invoked by the processing element and some units are implemented in a form of hardware. For example, each unit may be a separately disposed processing element, or may be integrated into a specific chip of the apparatus for implementation. In addition, each unit may be stored in a memory in a form of a program, and a specific processing element of the communication apparatus invokes the unit and executes a function of the unit. In addition, all or some of these units may be integrated together, or may be implemented independently. The processing element described herein may alternatively be a processor, or may be an integrated circuit that has a signal processing capability. In an implementation process, each step in the foregoing methods or each of the foregoing units may be implemented by using an integrated logic circuit of hardware in an element of the processor or implemented in a form of software invoked by a processing element.

In an example, any unit in the foregoing communication apparatus may be one or more integrated circuits configured to implement the foregoing methods, for example, one or more specific integrated circuits (Application-Specific Integrated Circuit, ASIC), one or more microprocessors (digital signal processor, DSP), one or more field programmable gate arrays (Field Programmable Gate Array, FPGA), or a combination of at least two of these integrated circuit forms. For another example, when the units in the communication apparatus may be implemented in a form of scheduling a program by a processing element, the processing element may be a general-purpose processor, for example, a central processing unit (Central Processing Unit, CPU) or another processor that may invoke a program. For another example, the units may be integrated together and implemented in a form of a system-on-a-chip (system-on-a-chip, SoC).

The foregoing receiving unit is an interface circuit of the communication apparatus, and is configured to receive a signal from another apparatus. For example, when the communication apparatus is implemented by using a chip, the receiving unit is an interface circuit used by the chip to receive a signal from another chip or apparatus. The foregoing sending unit is an interface circuit of the communication apparatus, and is configured to send a signal to another apparatus. For example, when the communication apparatus is implemented by using a chip, the sending unit is an interface circuit used by the chip to send a signal to another chip or apparatus.

In an implementation, units in the network device for implementing the steps in the foregoing methods may be implemented in a form of scheduling a program by the processing element. For example, an apparatus used for the network device includes a processing element and a storage element. The processing element invokes a program stored in the storage element, to perform the methods performed by the network device in the foregoing method embodiments. The storage element may be a storage element on a same chip as the processing element, that is, an on-chip storage element, or may be a storage element on a different chip from the processing element, that is, an off-chip storage element.

The units, the network device, for implementing the steps in the foregoing methods may be integrated together and implemented in a form of a system-on-a-chip. For example, a baseband apparatus includes an SoC chip, and is configured to implement the methods performed by the foregoing network device. At least one processing element and a storage element may be integrated into the chip, and the processing element invokes a program stored in the storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by invoking a program by a processing element, and functions of some units may be implemented by an integrated circuit.

It can be learned that the foregoing communication apparatus for the network device may include at least one processing element and an interface circuit, and the at least one processing element is configured to perform any method that is performed by the network device and that is provided in the foregoing method embodiments. The processing element may perform some or all steps performed by the network device in a first manner, to be specific, by invoking the program stored in the storage element; or may perform some or all steps performed by the network device in a second manner, to be specific, by using an integrated logic circuit of hardware in an element of the processor in combination with instructions; or may certainly perform, by combining the first manner and the second manner, some or all steps performed by the network device.

As described above, the processing element herein may be a general-purpose processor, for example, a CPU, or may be configured as one or more integrated circuits, for example, one or more ASICs, one or more microprocessors DSPs, one or more FPGAs, or a combination of at least two of these types of integrated circuits.

The storage element may be one memory, or may be a general term of a plurality of storage elements.

An embodiment of this application further provides an IPv6 network communication system, including a terminal, a data network, and a communication apparatus/a network device provided in any embodiment of this application. It may be understood that the communication system may include one or more same or different types of terminals, and one or more data networks that are used to support implementation of different services respectively.

It should be noted that, unless otherwise noted, "/" in this application represents the meaning of or, for example, A/B may represent A or B. The term "and/or" in this application describes only an association relationship for describing associated objects and represents that three relationships may exist. For example, A and/or B may represent the following three cases: Only A exists, both A and B exist, and only B exists. In addition, an element (element) appearing in a singular form with "a", "an", or "the" does not mean "one or only one" unless otherwise specified in the context, but means "one or more than one". For example, "a device" means for one or more such devices. Further, "at least one (at least one of) ..." means one or any combination of subsequent associated objects, for example, "at least one of A, B, and C" includes A, B, C, AB, AC, BC, ABC, or the like. Determining Y based on X does not mean determining Y based on only X, and may further mean determining Y based on X and other information.

Terms "first" and "second" are merely intended for a purpose of description, and shall not be understood as an indication or implication of relative importance or implicit indication of a quantity of indicated technical features. Therefore, a feature limited by "first" or "second" may explicitly indicate or implicitly include one or more such features. The terms "include", "contain", "have", and their variants all mean "include but are not limited to", unless otherwise specifically emphasized in another manner.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Finally, it should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions provided in the foregoing embodiments or make equivalent replacements to some technical features thereof, without departing from the spirit and scope of the technical solutions provided in embodiments of this application.

## Claims

1. An IPv6 network communication method, wherein the method is applied to a network device, and comprises:
receiving an uplink data packet sent by a terminal to a first data network, wherein the uplink data packet is used to request to establish a service connection;
modifying a source internet protocol IP address of the uplink data packet to a first IP address, and sending a modified uplink data packet to the first data network, wherein the first IP address comprises a first Internet Protocol version 6 IPv6 prefix configured by the first data network for the network device; and
generating connection tracking information of the service connection, wherein the connection tracking information indicates that a destination IP address of a downlink data packet that is from the first data network and that belongs to the service connection is the first IP address.

2. The method according to claim 1, wherein
the source IP address of the uplink data packet is a second IP address, and the second IP address comprises a second IPv6 prefix configured by a second data network for the network device; and
before the modifying a source IP address of the uplink data packet to a first IP address, the method further comprises:
performing IPv6-to-IPv6 network prefix translation NPTv6 on the second IP address based on the first IPv6 prefix to obtain the first IP address.

3. The method according to claim 1, wherein the method further comprises:
receiving the downlink data packet that is from the first data network and that belongs to the service connection;
modifying the destination IP address of the downlink data packet to the source IP address of the uplink data packet, and setting a connection state of the connection tracking information to indication information indicating that a connection succeeds; and
sending a modified downlink data packet to the terminal.

4. The method according to claim 2 or 3, wherein
the first data network comprises an internet protocol television IPTV network or a cloud virtual reality VR network; and
the second data network comprises the internet.

5. A communication apparatus, comprising:
a receiving unit, configured to receive an uplink data packet sent by a terminal to a first data network, wherein the uplink data packet is used to request to establish a service connection;
a processing unit, configured to modify a source internet protocol IP address of the uplink data packet to a first IP address, wherein the first IP address comprises a first Internet Protocol version 6 IPv6 prefix configured by the first data network for a network device;
the processing unit is further configured to generate connection tracking information of the service connection, wherein the connection tracking information indicates that a destination IP address of a downlink data packet that is from the first data network and that belongs to the service connection is the first IP address; and
a sending unit, configured to send a modified uplink data packet to the first data network.

6. The communication apparatus according to claim 5, wherein
the source IP address of the uplink data packet is a second IP address, and the second IP address comprises a second IPv6 prefix configured by a second data network for the network device; and
the processing unit is further configured to perform IPv6-to-IPv6 network prefix translation NPTv6 on the second IP address based on the first IPv6 prefix to obtain the first IP address.

7. The communication apparatus according to claim 5, wherein
the receiving unit is further configured to receive the downlink data packet that is from the first data network and that belongs to the service connection;
the processing unit is further configured to: modify the destination IP address of the downlink data packet to the source IP address of the uplink data packet, and set a connection state of the connection tracking information to indication information indicating that a connection succeeds; and
the sending unit is further configured to send a modified downlink data packet to the terminal.

8. The communication apparatus according to claim 6 or 7, wherein
the first data network comprises an internet protocol television IPTV network or a cloud virtual reality VR network; and
the second data network comprises the internet.

9. A communications apparatus, comprising a processor and an interface circuit, wherein the processor is configured to communicate with another apparatus through the interface circuit, and perform the method according to any one of claims 1 to 4.

10. An IPv6 network system, comprising a terminal, a first data network, and the communication apparatus according to any one of claims 5 to 9.

11. A computer-readable storage medium, configured to store instructions, wherein when the stored instructions are executed by a processor of a communication apparatus, the communication apparatus is enabled to implement the method according to any one of claims 1 to 4.
